# EUROPÄISCHE PATENTSCHRIFT

(11) **EP 3 213 001 B1**
(45) Veröffentlichungstag und Bekanntmachung des Hinweises auf die Patenterteilung: **06.06.2018**
(21) Anmeldenummer: 15793687.3
(22) Anmeldetag: 28.10.2015
(51) Int. Cl.: F24F 6/14, F24F 13/02, F24F 13/08

(54) **VORRICHTUNG ZUR LUFTBEFEUCHTUNG IN EINEM LUFTKANAL**
APPARATUS FOR HUMIDIFYING AIR IN AN AIR DUCT
DISPOSITIF HUMIDIFICATEUR D'AIR DANS UN CONDUIT D'AIR

(30) Priorität: 29.10.2014 AT 507802014
(43) Veröffentlichungstag der Anmeldung: 06.09.2017
(73) Patentinhaber: Merlin Technology GmbH, A-4911 Tumeltsham / Ried im Innkreis (AT)
(72) Erfinder: REISINGER, Johann, 4925 Pramet (AT)
(74) Vertreter: Patentanwaltskanzlei Hübscher
(86) Internationale Anmeldenummer: PCT/AT2015/050270
(87) Internationale Veröffentlichungsnummer: WO 2016/065384

(56) Entgegenhaltungen:
- WO-A1-03/001120

## Beschreibung

### Technisches Gebiet

Die Erfindung bezieht sich auf eine Vorrichtung zur Luftbefeuchtung in einem Luftkanal mit einer Eintragseinrichtung für einen Flüssigkeitsnebel und mit einer dieser Eintragseinrichtung in Strömungsrichtung (3) vorgelagerten Luftleiteinrichtung.

### Stand der Technik

Um bei Vorrichtungen dieser Art eine möglichst vollständige Aufnahme des Flüssigkeitsnebels in der Luftströmung zu erreichen, wurde bereits vorgeschlagen (WO 2003/001120 A1), die Eintragseinrichtung für den Flüssigkeitsnebel aus reihenweise angeordneten Düsen zum Zerstäuben der Flüssigkeit aufzubauen und den reihenweise angeordneten Düsen eine Luftleiteinrichtung innerhalb des Luftkanals vorzulagern, die aus Turbulenzflügeln in Form rechtwinkeliger Dreiecke aufgebaut ist, deren kürzere Kathetenseite in Richtung der Düsenreihe und deren längere Kathetenseite senkrecht dazu ausgerichtet sind. Diese Turbulenzflügel sind gegenüber der Luftströmung im Luftkanal so einstellbar angeordnet, dass Luftwirbel mit einer zur jeweiligen Düse koaxialen Drallachse entstehen. sodass die von den vorzugsweise als Dralldüsen ausgebildeten Düsen in die Strömungsluft eingedüsten Flüssigkeitströpfchen im Wesentlichen in einer schraubenförmigen Luftströmung mitgerissen werden, was zwar den innerhalb des Luftkanals zurückgelegten Weg der Tröpfchen verlängert, jedoch nicht zu einer weitgehenden Verdampfung der Flüssigkeit ohne Gefahr einer Tröpfchenabscheidung führt. Die WO 2003/001120 A1 offenbart dabei den Oberbegriff von Anspruch 1. Ähnliche Verhältnisse ergeben sich bei einem Luftwäscher zur Befeuchtung und Temperierung von Luft in Klimaanlagen (EP 0 251 196 A2), wenn die einzelnen Düsen des Luftwäschers von einer Luftleiteinrichtung umgeben sind, mit deren Hilfe ein Drall in die an den Düsen vorbeiströmende Luftströmung eingebracht wird. Um das Austragen von Flüssigkeitströpfchen durch den aus dem Luftwäscher austretenden, befeuchteten Luftstrom zu unterbinden, muss allerdings ein Tropfenabscheider eingesetzt werden.

### Darstellung der Erfindung

Der Erfindung liegt somit die Aufgabe zugrunde, eine Vorrichtung zur Luftbefeuchtung innerhalb eines Luftkanals so auszugestalten, dass mit einer weitgehenden Verdampfung des in die Luftströmung eingebrachten Flüssigkeitsnebels gerechnet werden kann, und zwar innerhalb eines vergleichsweise kurzen Längsabschnitts des Luftkanals.

Ausgehend von einer Vorrichtung der eingangs geschilderten Art löst die Erfindung die gestellte Aufgabe dadurch, dass die Luftleiteinrichtung wenigstens einen quer zur Strömungsrichtung verlaufenden Flügel mit einem Tragflächenprofil umfasst, der gegenüber der Strömungsrichtung angestellt ist.

Durch das Vorsehen von zumindest einem Flügel mit einem Tragflächenprofil wird einerseits der durch die Luftleiteinrichtung bedingte Strömungswiderstand klein gehalten und anderseits aufgrund einer entsprechenden Flügelanstellung an der Profilhinterkante eine sich über die Flügellänge erstreckende Wirbelablösung erreicht, sodass der in die Luftströmung eingebrachte Flüssigkeitsnebel von Luftwirbeln erfasst wird, deren Wirbelachse quer zur Strömungsrichtung verläuft. Die von diesen Luftwirbeln mitgerissenen Flüssigkeitströpfchen des Flüssigkeitsnebels werden aufgrund der Verwirbelung in der zu befeuchtenden Luftströmung fein verteilt und legen zufolge der quer zur Luftströmung verlaufenden Wirbelachsen ein Vielfaches der durch den Luftkanal vorgegebenen Förderstrecke mit der Wirkung zurück, dass eine weitgehende Verdampfung aller Flüssigkeitströpfchen innerhalb eines vergleichsweise kurzen Längsabschnitts des Luftkanals sichergestellt werden kann. Damit kann ein Abscheiden der sonst nicht verdampften Flüssigkeitströpfchen vermieden und der Wirkungsgrad der Luftbefeuchtung erheblich verbessert werden.

Verläuft der Flügel parallel zu wenigstens einer quer zur Strömungsrichtung ausgerichteten Reihe von Austragöffnungen für den Flüssigkeitsnebel, so wird der Flüssigkeitsnebel in vorteilhafter Art über die Drallachse der sich entlang der hinteren Profilkante des Tragflächenprofils vom Flügel ablösenden Luftwirbel verteilt in die Luftströmung eingebracht, was eine gleichmäßige Verteilung des Flüssigkeitsnebels über die Wirbelzone unterstützt, insbesondere wenn zwischen dem Flügel und der Reihe der Austragöffnungen ein entsprechender Abstand senkrecht zur Strömungsrichtung und senkrecht zur Reihe der Austragöffnungen für die Wirbelausbildung eingehalten wird. Die Reihe von Austragöffnungen kann auch durch einen Austragschlitz für den Flüssigkeitsnebel ersetzt werden, sodass sich hinsichtlich der Eintragung des Flüssigkeitsnebels quer zur Strömungsrichtung vergleichbare Verhältnisse einstellen.

Obwohl es unter bestimmten Voraussetzungen durchaus sinnvoll sein kann, einer Reihe der Austragöffnungen für den Flüssigkeitsnebel lediglich einen Flügel mit Tragflächenprofil zuzuordnen, ergeben sich im Allgemeinen besonders vorteilhafte Strömungsbedingungen, wenn der Reihe der Austragöffnungen zwei bezüglich der Strömungsrichtung symmetrisch angeordnete Flügel vorgelagert sind. Der in die Luftströmung eingebrachte Flüssigkeitsnebel wird durch die beidseits der Öffnungsreihe ausgebildeten, sich von der Profilhinterkante der Tragflächenprofile ablösenden Wirbel erfasst und innerhalb dieser Wirbelströmungen innig mit der zu befeuchtenden Luft vermischt, wobei die Auswurfweite des Flüssigkeitsnebels von der Anordnung der Tragflächenprofile abhängt. Sind die eine Beschleunigung der Strömungsgeschwindigkeit bedingenden Oberseiten der Tragflächenprofile der Reihe der Austragöffnungen zugekehrt, so bedingen die von den Tragflächenprofilen abreißenden Luftwirbel eine Bündelung des eingebrachten Flüssigkeitsnebels, während bei einer Tragflächenanordnung mit der der Reihe der Austragöffnungen zugekehrten Unterseite eine größere Auffächerung des Flüssigkeitsnebels erreicht wird. Analoge Strömungsverhältnisse finden sich bei einer zu einem Austragschlitz symmetrischen Anordnung der Flügel.

Ist der Reihe an Austragöffnungen oder dem Austragschlitz ein Anströmprofil vorgelagert, so ergeben sich besonders günstige Strömungsbedingungen im Austragsbereich des Flüssigkeitsnebels, insbesondere wenn durch dieses Anströmprofil in Verbindung mit dem jeweils zugehörigen Flügel der Luftleiteinrichtung ein Strömungsdurchlass entsteht.

Wie bereits ausgeführt wurde, hängt die Wirbelbildung einerseits vom Tragflächenprofil und anderseits vom Anstellwinkel des Tragflächenprofils ab. Um eine Anpassung an die jeweils gegebenen Anforderungen zu ermöglichen, kann der Anstellwinkel des Flügels bzw. der Flügel einstellbar sein. Die Flügel müssen zu diesem Zweck lediglich um eine zur Längsachse des Flügels parallele Achse schwenkverstellbar gelagert werden.

### Kurze Beschreibung der Zeichnungen

In der Zeichnung ist der Erfindungsgegenstand beispielsweise dargestellt. Es zeigen
- Fig. 1: eine erfindungsgemäße Vorrichtung zur Luftbefeuchtung in einem schematischen Längsschnitt des Luftkanals senkrecht zur Achse der Reihen von Austragöffnungen,
- Fig. 2: eine Reihe der Austragöffnungen mit einer Leiteinrichtung aus zwei Flügeln mit einem Tragflächenprofil in einem Schnitt senkrecht zur Reihe der Austragöffnungen in einem größeren Maßstab, wobei die Strömungsverhältnisse schematisch durch Strömungslinien angedeutet sind,
- Fig. 3: eine der Fig. 2 entsprechende Darstellung einer Konstruktionsvariante mit im Vergleich zur Fig. 2 unterschiedlichen Anordnung der Tragflächenprofile und
- Fig. 4: eine der Fig. 2 entsprechende Darstellung einer Luftleiteinrichtung für eine Reihe der Austragöffnungen mit lediglich einem Tragflächenprofil.

### Weg zur Ausführung der Erfindung

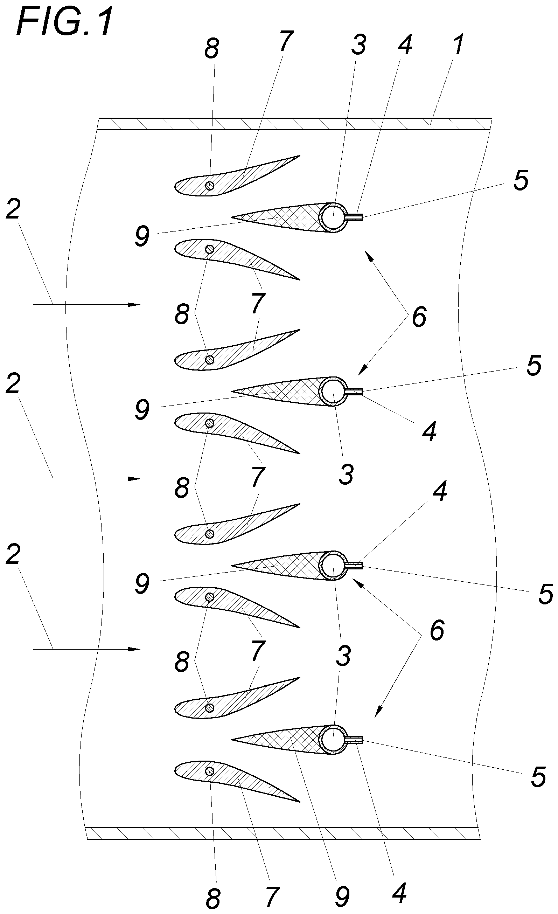

Um die durch einen Luftkanal 1 mit üblicherweise rechteckigem Querschnitt geförderte Luft zu befeuchten, ist gemäß der Fig. 1 eine Eintragseinrichtung für einen Flüssigkeitsnebel mit mehreren parallelen, quer zur Strömungsrichtung 2 verlaufenden Verteilerrohren 3 für eine zu zerstäubende Flüssigkeit vorgesehen, mit der über die Rohrlänge verteilte, in Strömungsrichtung 2 ausgerichtete Düsen 4 beaufschlagt werden, die die unter einem entsprechenden Druck stehende Flüssigkeit in Nebelform in die Luftströmung eintragen. Die Austragöffnungen 5 dieser Düsen bilden je eine quer zur Strömungsrichtung 2 verlaufende Reihen 6, denen Luftleiteinrichtungen aus parallel zu den Reihen 6 der Austragöffnungen 5 verlaufenden Flügeln 7 mit einem Tragflächenprofil vorgelagert sind. Diese Flügel 7 können um Schwenkachsen 8 in ihrem Anstellwinkel gegenüber der Strömungsrichtung 2 eingestellt werden. Auf der den Flügeln 7 zugewandten Seite sind die Verteilerrohre 3 mit einem Anströmprofil 9 verkleidet, zwischen dem und den zugehörigen Flügeln 7 Strömungsdurchlässe für die Luftströmung gebildet werden, um im Einspritzbereich des Flüssigkeitsnebels vorteilhafte Strömungsbedingungen zu erreichen.

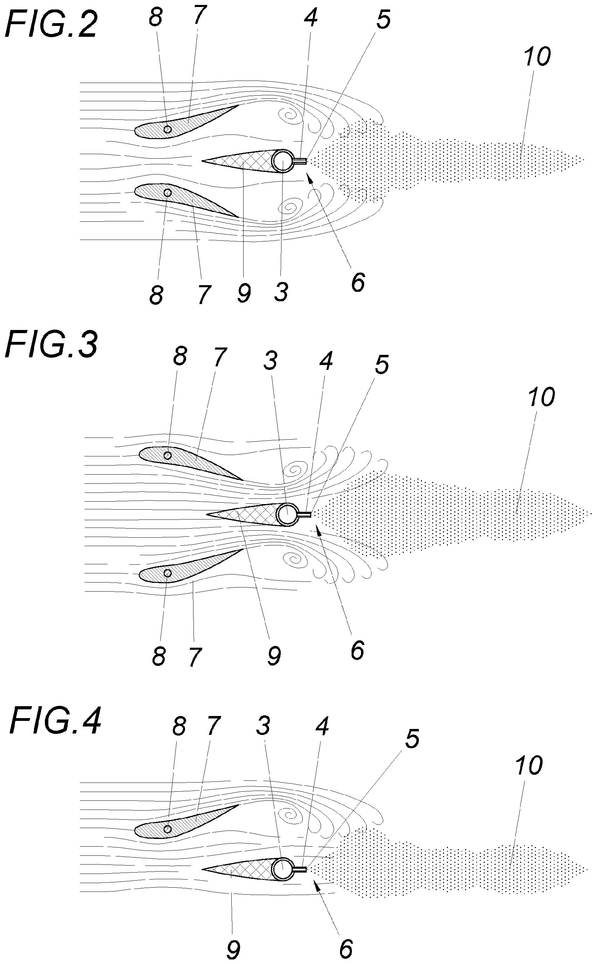

In der Fig. 2 sind die Strömungsverhältnisse im Bereich einer Reihe 6 der Austragöffnungen 5 für einen Flüssigkeitsnebel 10 durch Strömungslinien schematisch angedeutet. Aufgrund der Flügelanordnung mit einem Tragflächenprofil, dessen eine Strömungsbeschleunigung bewirkende Oberseite den Düsen 4 bzw. dem Anströmprofil 9 zugekehrt ist, lösen sich an der Profilhinterkante Strömungswirbel ab, die eine Bündelung des eingedüsten Flüssigkeitsnebels 10 bedingen. Man erkennt, dass die Wirbelachsen im Wesentlichen parallel zur Profilhinterkante, also quer zur Strömungsrichtung 2, verlaufen, sodass die von diesen Wirbelschichten erfassten Flüssigkeitströpfchen nicht nur innig mit der Strömungsluft vermischt werden, sondern auch zufolge der Wirbelbewegung um eine zur Strömungsrichtung 2 quer verlaufende Wirbelachse eine Wegstrecke innerhalb des Luftkanals 1 zurücklegen, die einem Vielfachen der entsprechenden Längserstreckung des Luftkanals 1 entspricht. Dies bedeutet, dass innerhalb eines vergleichsweise kurzen Längsabschnitts des Luftkanals 1 aufgrund der besonderen Wirbelausbildung für die Flüssigkeitströpfchen eine Wegstrecke zur Verfügung gestellt werden kann, die für ein vollständiges Verdampfen der Flüssigkeitströpfchen ausreicht, zumal durch diese Wirbelbildung eine innige Vermischung der Flüssigkeitströpfchen mit der Luft sichergestellt wird.

Gemäß der Ausführungsform nach der Fig. 3 sind die Flügel 7 im Vergleich zur Fig. 2 mit der Profilunterseite gegen die Düsenreihe bzw. das Anströmprofil 9 ausgerichtet, was zu einer Wirbelablösung auf der von der Düsenreihe abgekehrten Profilseite führt. Der eingedüste Flüssigkeitsnebel 10 wird daher über die Luftwirbel aufgefächert, sodass durch eine solche Flügelanordnung im Vergleich zur Flügelanordnung nach der Fig. 2 unterschiedlichen Anforderungen entsprochen werden kann.

Aus der Fig. 4 ist zu entnehmen, dass unter bestimmten Voraussetzungen auch eine einseitige Flügelanordnung sinnvoll sein kann. Mit dem auf einer Seite der Düsenanordnung vorgesehenen Flügel 7 werden hinsichtlich des Eintrags des Flüssigkeitsnebels 10 in die Luftströmung unsymmetrische Verhältnisse erreicht, die beispielsweise in Randbereichen des Luftkanals 1 von Vorteil sein können.

Obwohl es grundsätzlich möglich ist, eine erfindungsgemäße Luftbefeuchtungseinrichtung mit nur einer Düsenreihe vorzusehen, werden mit der Anordnung mehrerer Düsenreihen besonders vorteilhafte Konstruktionsverhältnisse geschaffen, und zwar nicht nur hinsichtlich der Düsenverteilung über den Querschnitt des Luftkanals 1, sondern auch hinsichtlich der Dosierung der eingedüsten Flüssigkeitsmenge. Um einen vorgegebenen Feuchtigkeitsgehalt für die aus dem Luftkanal 1 ausströmende Luft zu erreichen, ist eine vom Feuchtigkeitsgehalt der in den Luftkanal einströmenden Luft abhängige, zu verdampfende Flüssigkeitsmenge erforderlich. Die über eine Düsenreihe eindüsbare Flüssigkeitsmenge hängt bei gegebenen Konstruktionsvoraussetzungen vom Flüssigkeitsdruck ab, mit dem die einzelnen Düsen 4 beaufschlagt werden. Ist nur eine geringe Flüssigkeitsmenge zum Erreichen eines vorgegebenen Feuchtigkeitsgehalts der aus dem Luftkanal 1 austretenden Luft erforderlich, so kann diese Flüssigkeitsmenge über eine Düsenreihe in den Luftkanal eingebracht werden, wobei die Flüssigkeitsmenge über den Flüssigkeitsdruck dosiert wird. Übersteigt die Flüssigkeitsanforderung die bei maximalem Beaufschlagungsdruck über eine Düsenreihe einbringbare Flüssigkeitsmenge, so kann eine weitere Düsenreihe mit Flüssigkeit beaufschlagt werden, wobei in beiden Düsenreihen mit dem für eine ausreichend feine Vernebelung der Flüssigkeit erforderlichen Minimaldruck begonnen wird, um je nach Bedarf den Flüssigkeitsdruck für beide Düsenreihen bis zum Maximaldruck zu erhöhen, bevor zur Abdeckung eines zusätzlichen Flüssigkeitsbedarfs eine weitere Düsenreihe bei Minimaldruck für alle nunmehr zum Einsatz kommenden Düsenreihen zugeschaltet wird.

Obwohl gemäß dem dargestellten Ausführungsbeispiel der in die zu befeuchtende Luft einzutragende Flüssigkeitsnebel in einfacher Weise durch ein Zerstäuben der Flüssigkeit mit Hilfe von unter einem entsprechenden Druck beaufschlagbaren Düsen 4 erzeugt wird, ist die Erfindung keineswegs auf eine solche Erzeugung eines Flüssigkeitsnebels beschränkt, da es lediglich darauf ankommt, einen Flüssigkeitsnebel in die zu befeuchtende Luft einzutragen. Die Nebelerzeugung könnte somit auch durch einen Ultraschallgenerator erfolgen, wobei die Eintragseinrichtung im Wesentlichen Austragöffnungen umfassen muss, durch die der Flüssigkeitsnebel in den Luftkanal 1 eingebracht wird. Die Reihen 6 solcher Austragöffnungen 5 können auch durch Austragschlitze ersetzt werden.

## Patentansprüche

1. Vorrichtung zur Luftbefeuchtung in einem Luftkanal (1) mit einer Eintragseinrichtung für einen Flüssigkeitsnebel (10) und mit einer dieser Eintragseinrichtung in Strömungsrichtung (2) vorgelagerten Luftleiteinrichtung, **dadurch gekennzeichnet, dass** die Luftleiteinrichtung wenigstens einen quer zur Strömungsrichtung (2) verlaufenden Flügel (7) mit einem Tragflächenprofil umfasst, der gegenüber der Strömungsrichtung (2) angestellt ist.

2. Vorrichtung nach Anspruch 1, **dadurch gekennzeichnet, dass** der Flügel (7) parallel zu wenigstens einer quer zur Strömungsrichtung (2) ausgerichteten Reihe (6) von Austragöffnungen (5) für den Flüssigkeitsnebel (10) verläuft und in einem zur Strömungsrichtung (2) und zur Reihe (6) der Austragöffnungen (5) senkrechten Abstand von der Reihe (6) der Austragöffnungen (5) angeordnet ist.

3. Vorrichtung nach Anspruch 1, **dadurch gekennzeichnet, dass** der Flügel (7) parallel zu wenigstens einem quer zum Luftkanal (1) ausgerichteten Austragschlitz für den Flüssigkeitsnebel (10) verläuft und in einem zur Strömungsrichtung (2) und zum Austragschlitz senkrechten Abstand vom Austragschlitz angeordnet ist.

4. Vorrichtung nach Anspruch 2 oder 3, **dadurch gekennzeichnet, dass** zumindest einer Reihe (6) der Austragöffnungen (5) oder zumindest einem Austragschlitz zwei bezüglich der Strömungsrichtung (2) symmetrisch angeordnete Flügel (7) vorgelagert sind.

5. Vorrichtung nach einem der Ansprüche 2 bis 4, **dadurch gekennzeichnet, dass** der Reihe (6) der Austragöffnungen (5) oder dem Austragschlitz ein Anströmprofil (9) vorgelagert ist.

6. Vorrichtung nach einem der Ansprüche 1 bis 5, **dadurch gekennzeichnet, dass** der Anstellwinkel des Flügels (7) bzw. der Flügel (7) einstellbar ist.

## Claims

1. Apparatus for humidifying air in an air duct (1), having a feed device for a liquid mist (10) and having an air conducting device located upstream of this feed device in the flow direction (2), **characterised in that** the air conducting device comprises at least one wing (7) extending transversely to the flow direction (2) and having an aerofoil profile which is pitched with respect to the flow direction (2).

2. Apparatus as claimed in claim 1, **characterised in that** the wing (7) extends parallel to at least one row (6) - oriented transversely to the flow direction (2) - of discharge openings (5) for the liquid mist (10) and is disposed at a distance from the row (6) of the discharge openings (5) perpendicular to the flow direction (2) and to the row (6) of the discharge openings (5).

3. Apparatus as claimed in claim 1, **characterised in that** the wing (7) extends parallel to at least one discharge slit - oriented transversely to the air duct (1) - for the liquid mist (10) and is disposed at a distance from the discharge slit perpendicular to the flow direction (2) and to the discharge slit.

4. Apparatus as claimed in claim 2 or 3, **characterised in that** two wings (7) disposed symmetrically with respect to the flow direction (2) are located upstream of least one row (6) of the discharge openings (5) or at least one discharge slit.

5. Apparatus as claimed in any one of claims 2 to 4, **characterised in that** an incident flow profile (9) is located upstream of the row (6) of the discharge openings (5) or the discharge slit.

6. Apparatus as claimed in any one of claims 1 to 5, **characterised in that** the pitch angle of the wing (7) or wings (7) is adjustable.

## Revendications

1. Dispositif humidificateur d'air dans un conduit d'air (1), avec un dispositif d'entrée pour un brouillard liquide (10) et avec un dispositif d'acheminement d'air implanté, dans le sens d'écoulement (2), en amont de ce dispositif d'entrée, **caractérisé en ce que** le dispositif d'acheminement d'air comprend au moins une ailette (7) disposée transversalement au sens d'écoulement (2) avec un profil intrados, lequel est réglé par rapport au sens d'écoulement (2).

2. Dispositif selon la revendication 1, **caractérisé en ce que** l'ailette (7) est parallèle au moins à une rangée (6), orientée transversalement au sens d'écoulement (2), d'ouvertures de sortie (5) pour le brouillard de liquide (10) et est disposée espacée, perpendiculairement à la rangée (6) des ouvertures de sortie (5) et au sens d'écoulement (2), de la rangée (6) des ouvertures de sortie (5).

3. Dispositif selon la revendication 1, **caractérisé en ce que** l'ailette (7) est parallèle au moins à une fente de sortie, orientée transversalement au conduit d'air (1), pour le brouillard de liquide (10), et est disposée perpendiculairement à la fente de sortie et au sens d'écoulement (2), à distance de la fente de sortie.

4. Dispositif selon la revendication 2 ou 3, **caractérisé en ce que** deux ailettes (7) disposées symétriquement par rapport au sens d'écoulement (2) sont placées en amont d'au moins d'une rangée (6) des ouvertures de sortie (5) ou d'au moins d'une fente de sortie.

5. Dispositif selon l'une des revendications 2 à 4, **caractérisé en ce qu'**un profil d'écoulement (9) est placé en amont de la rangée (6) des ouvertures de sortie (5) ou de la fente de sortie.

6. Dispositif selon l'une des revendications 1 à 5, **caractérisé en ce que** l'angle d'attaque de l'ailette (7) ou des ailettes (7) peut être réglé.
